# EUROPEAN PATENT APPLICATION

(11) **EP 1 808 824 A2**
(43) Date of publication of application: **18.07.2007**
(21) Application number: 06026435.5
(22) Date of filing: 20.12.2006
(51) Int. Cl.: G07D 7/00

(54) **Sheet processing method and sheet processing apparatus**

(30) Priority: 26.12.2005 JP 2005373510
(71) Applicant: KABUSHIKI KAISHA TOSHIBA, Tokyo 105-8001 (JP)
(72) Inventor: Yoshida, Kazuhisa c/o Intell. Prop. Div Toshiba Corp., Minato-ku Tokyo 105-8001 (JP)
(74) Representative: HOFFMANN EITLE

(57) **Abstract**

This invention includes an inspection unit (7) which includes a first inspection unit (45) which includes a first detection unit (36) which detects a first feature amount and a second detection unit (37) which detects a second feature amount and specifies the classification of the sheet, and a second inspection unit (46) which performs authenticity determination.

## Description

The present invention relates to a sheet processing method for discrimination processing of, for example, bill and the like, and a sheet processing apparatus used therefor.

Conventionally, a sheet processing apparatus such as a bill processing apparatus sorts a plurality of types of bill according to conditions such as bill types or the states of bill. Such a bill processing apparatus has a plurality of cassettes assigned in accordance with the conditions of bill (the types or states of bill). In the above bill processing apparatus, a discrimination unit discriminates the types or states of bill, and the respective bill are collected in the respective cassettes on the basis of the discrimination results.

The discrimination unit discriminates the types of bill by detecting character images representing their denominations as disclosed in, for example, Jpn. Pat. Appln. KOKAI Publication No. 6-195543. However, changing the graphic pattern of a bill will produce old and new bill which have the same denomination. For this reason, detecting only areas containing character images representing the denominations does not allow old and new bill to be discriminated and separately collected.

It is an object of the present invention to provide a sheet processing apparatus which can discriminate sheets having similar graphic patterns and collect them, and a sheet processing method using the method.

According to the present invention, there is provided a sheet processing method of determining a sheet and processing the sheet on the basis of the determination result, comprising loading the sheet into a loading unit, conveying the sheet loaded into the loading unit, causing a first inspection unit to detect a first feature amount from a first area of the sheet conveyed by conveying, and narrowing down a range of a classification of the sheet on the basis of the first feature amount, causing a second inspection unit to detect a second feature amount from a second area different from the first area of the sheet and further specifying a classification of the sheet by narrowing down the range thereof on the basis of the detected second feature amount, causing a third inspection unit to detect a third feature amount of the sheet and determining the sheet, whose classification is specified, on the basis of the detected third feature amount, and collecting the sheet in a collecting unit on the basis of the determination result.

According to the present invention, there is provided a sheet processing apparatus comprising a loading unit in which a sheet is loaded, a conveying unit which conveys the sheet loaded by the loading unit, a first inspection unit which detects a first feature amount from a first area of the sheet conveyed by the conveying unit, a second inspection unit which detects a second feature amount from a second area different from the first area, a third inspection unit which detects a third feature amount of the sheet having the specified classification, a detection information processing unit which processes pieces of detection information of the sheet from the first inspection unit, second inspection unit, and third inspection unit, and performs determination, and a collecting unit which collects the sheet on the basis of the determination result, wherein the detection information processing unit narrows down a range of a classification of the sheet on the basis of the first feature amount detected by the first inspection unit, further specifies a classification of the sheet, whose range is narrowed down, on the basis of the second feature amount detected by the second inspection unit, and determines the sheet, whose classification is specified, on the basis of the third feature amount of the sheet detected by the third inspection unit.

Using the present invention makes it possible to discriminate sheets having similar graphic patterns and collect them.

The invention can be more fully understood from the following detailed description when taken in conjunction with the accompanying drawings, in which:
FIG. 1 is a schematic view showing an example of the arrangement of a sheet processing apparatus according to the present invention;
FIG. 2 is a schematic view showing an example of the arrangement of an inspection unit 7 in FIG. 1;
FIG. 3 is a schematic view showing another example of the arrangement of the inspection unit 7 in FIG. 1;
FIG. 4 is a view for explaining the arrangement of a first inspection unit;
FIG. 5 is a view showing a state wherein infrared light is applied to an example of a sheet;
FIG. 6 is a view showing a state wherein infrared light is applied to another example of a sheet; and
FIG. 7 is a flowchart showing processing operation in a detection information processing unit 20.

An embodiment of the present invention will be described below with reference to the views of the accompanying drawing.

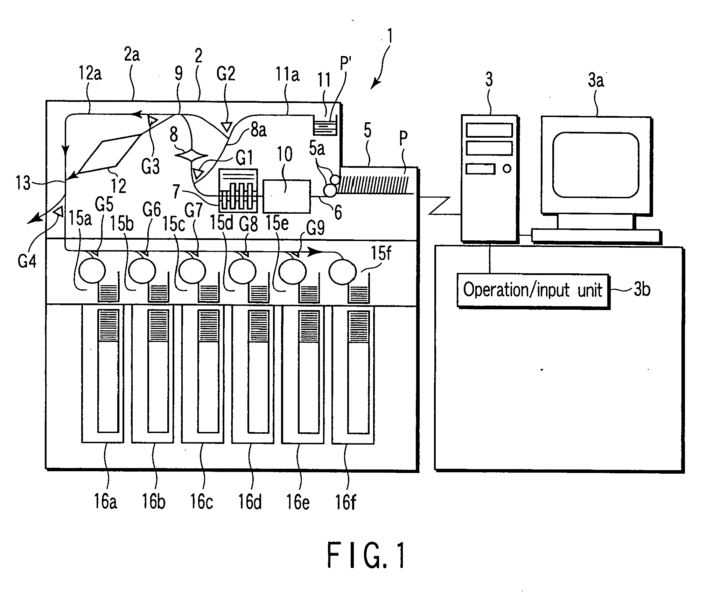

FIG. 1 is a view schematically showing the structure of a bill processor as a sheet processing apparatus according to the present invention. As shown in FIG. 1, a bill processor 1 comprises a bill processing unit 2 and a teller machine 3. The bill processor 1 is designed to allow a plurality of rectangular bill P of a plurality of denominations having different sizes to be loaded therein altogether and to classify and collect all the rectangular bill P with their obverse and reverse surfaces and top and bottom sides being aligned in the same directions.

The bill processing unit 2 of the bill processor 1 connects to the personal computer (PC) 3 called a teller machine. A control program for sorting designation or the like for designating in which place and direction bill are collected in the main body 1 is installed in the PC 3. The PC 3 sets sorting designation in advance in the main body 1. On the basis of this sorting designation, when bill in various directions or of various types are supplied to a pickup unit, the main body 1 picks up the bill one by one and aligns/positions them. The main body 1 then determines, for example, the denomination of each bill and whether each bill is fit/unfit and authentic/counterfeit. In accordance with this determination result, the bill processing unit 2 collects bill in designated collecting units. A monitor 3a and an operation/input unit 3b connect to the PC 3. The monitor 3a serves as a display unit for displaying various kinds of information to an operator. The operation/input unit 3b serves as a mode selecting unit for receiving various kinds of operation inputs by the operator. The PC 3 also has a function of storing a counting result, an error content, reject data, and the like for each processing batch as log data.

The bill processing unit 2 includes a housing 2a in the form of an almost rectangular box serving as a casing for the unit. The housing 2a has a slot (not shown) into which bill are to be loaded. A loading unit 5 is provided below the slot to allow a plurality of bill P to be loaded therein altogether in a stacked state while being set in the upright position in the widthwise direction. The loading unit 5 aligns all the bill P by abutting one of the two sides of each bill against a stage, and moves a backup plate (not shown) to the rear end of the bill P stacked on the stage to press the bill P on the stage against one pair of pickup rollers 5a serving as a pickup unit. When the pair of pickup rollers 5a placed near the slot of the stage rotates, the bill P on the stage are sequentially picked up onto a convey path 6, starting from the bill at the front end.

An aligning/positioning unit 10 is provided on the convey path 6 at a position immediately behind the loading unit 5. The aligning/positioning unit 10 corrects any skew and shift of each bill P to prevent a postural failure of the bill P, i.e., a trouble caused by skew or shift. An inspection unit 7 is provided on the convey path 6 at a position immediately behind the aligning/positioning unit 10. The inspection unit 7 detects characteristics of the bill P, e.g., the denomination, obverse/reverse surface, top/bottom side, soil, or damage. The inspection unit 7 comprises a plurality of detection units and detects various kinds of information (a plurality of kinds of feature amounts) from the surface of the bill P conveyed on the convey path 6. A plurality of gates G1 to G9 for selectively switching the convey direction of the bill P on the basis of the detection results obtained by the inspection unit 7 are provided on the convey path 6 on the downstream side of the inspection unit 7.

A switchback mechanism 8 is provided on one of convey paths made to branch off at the position of the gate G1 provided on the most upstream side. The switchback mechanism 8 functions to reverse the convey direction of the bill P fed through the gate G1 to reverse its top and bottom sides and feed the bill P again on the convey path. The other convey path made to branch off at the position of the gate G1 functions as a bypass convey path 8a for bypassing the switchback mechanism 8. The bypass convey path 8a is set to a length that causes the bill P passing through the switchback mechanism 8 via the gate G1 and the bill P passing through the bypass convey path 8a to reach a merging portion 9 at the same time intervals.

The bypass convey path 8a branches off to a rejection convey path 11a along the way to the merging portion 9. The gate G2 is provided at this branch position. A rejecting unit 11 for rejecting bill P' to be rejected is provided at the end of the rejection convey path 11a which is made to branch off via the gate G2. The bill P' to be rejected are bill for which it is determined by the inspection unit 7 that processing on the subsequent stage cannot be performed include, for example, two bill which are determined as bill picked up simultaneously, a bill determined as the one which is skewed beyond a predetermined level, and bill which are not determined as fit bill which can be re-circulated, such as unfit bill and counterfeit bill. In addition, bill whose characteristics cannot be detected by the inspection unit 7 are delivered to the rejecting unit 11. The rejecting unit 11 is provided near the unloading port (not shown) formed in the housing 2a to allow access from the outside of the housing 2a.

The convey path 6 on the downstream side of the merging portion 9 is made to branch off in two directions again. The gate G3 is provided at this branch position. A reversing mechanism 12 is provided on one of the convey paths which are made to branch off at the position of the gate G3. The reversing mechanism 12 has a twisted convey path which extends from the inlet to the outlet and is twisted around the central axis through 180°. When the bill P passes through this twisted convey path, the obverse and reverse surfaces of the bill P are reversed. The other convey path made to branch off at the position of the gate G3 functions as a bypass convey path 12a for bypassing the reversing mechanism 12. The bypass convey path 12a is set to a length that causes the bill P passing through the twisted convey path of the reversing mechanism 12 via the gate G3 and the bill P passing through the bypass convey path 12a to reach a merging portion 13 at the same time intervals.

One of the convey paths which are made to branch off in two directions at the position of the gate G4 on the downstream side of the merging portion 13 functions as a horizontal convey path 14 extending almost horizontally to the right in FIG. 1. The remaining five gates G5 to G9 are arranged at almost equal intervals on the horizontal convey path 14. Six collecting units 15a to 15f, which are larger in number than the gates G5, G6, G7, G8, and G9 by one, are provided at positions where the horizontal convey path 14 is made to branch off below by the respective gates. Stackers 16a to 16f which receive and store bill from the collecting units 15a to 15f in which collection of bill has been settled are provided below them in one-to-one correspondence.

The bill P passing through the merging portion 13 are made to selectively pass through the switchback mechanism 8 and/or the reversing mechanism 12 so as to be aligned in predetermined directions associated with their obverse and reverse surfaces and top and bottom sides. Therefore, the bill P collected in the collecting units 15a to 15f are collected in predetermined collecting units with their obverse and reverse surfaces and top and bottom sides being aligned.

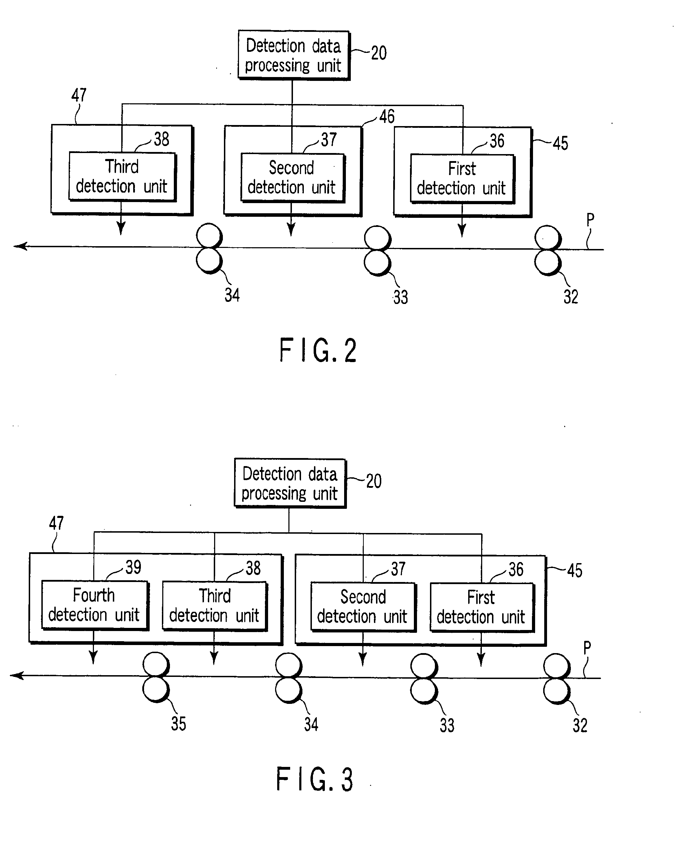

FIG. 2 is a schematic view showing an example of the arrangement of the inspection unit 7.

As shown in FIG. 2, the inspection unit 7 includes a first detection unit 36, second detection unit 37, and third detection unit 38 along the convey path. Convey members, e.g., convey rollers 32, 33, and 34, are provided between a position near the introduction port of the inspection unit 7 and the detection units 36, 37, and 38. The bill P is moved on the convey path in the direction indicated by the arrow by the convey rollers 32, 33, and 34, and is detected by the detection units 36, 37, and 38.

The detection units 36, 37, and 38 connect to a detection information processing unit 20. The detection information processing unit 20 processes detection information from the detection units 36, 37, and 38.

In this case, for example, a first inspection 45 which is used to narrow down the range of classifications of bill having similar graphic patterns includes the first detection unit 36, and a second inspection unit 46 which is used to further narrow down the range of classifications of bill having similar graphic patterns and specify a classification includes the second detection unit 37. A third inspection unit 47 which is used to perform authenticity determination to determine whether a bill whose classification is specified is, for example, a fit bill which can be re-circulated, an unfit bill, or a counterfeit bill includes the third detection unit 38. The first, second, and third inspection units 45, 46, and 47 can additionally include detection units which can detect other feature amounts, as needed. FIG. 3 shows an example of such an arrangement.

FIG. 3 is a schematic view showing another example of the arrangement of the inspection unit 7.

As shown in FIG. 3, the inspection unit 7 has the same arrangement as that shown in FIG. 2 except that the unit 7 includes a fourth detection unit 39 in the third inspection unit 47 and convey rollers 35 between the fourth detection unit 39 and the third detection unit 38.

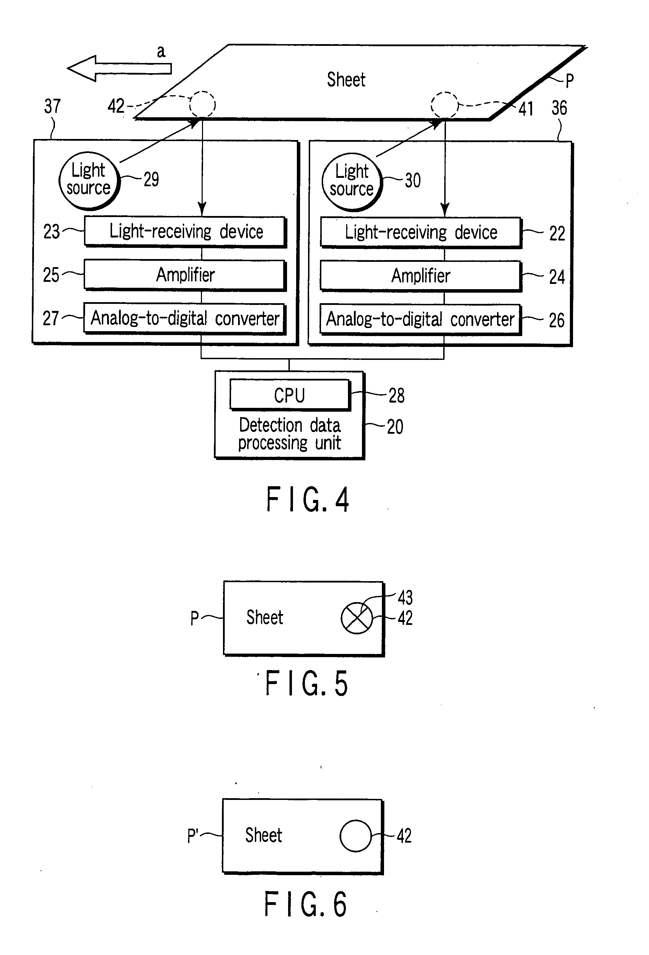

FIG. 4 is a view for explaining the arrangements of the first inspection 45 and second inspection unit 46.

As shown in FIG. 4, the first detection unit 36 comprises a light source 30 which is provided to detect, for example, visible light image information and includes, for example, a blue lamp, green lamp, and red lamp, a light-receiving device 22 including three light-receiving elements, e.g., photodiodes, which receive reflected light beams of light beams emitted from the respective lamps, an amplifier 24 which amplifies current outputs generated by the light-receiving elements, and an A/D converter 26 which converts the amplified currents or voltage values into digital signals.

The second detection unit 37 is provided to detect, for example, infrared image information, and includes an infrared lamp as an infrared light source 29, a light-receiving unit 23 including a light-receiving element, e.g., a photodiode, which receives reflected light of light emitted from the infrared lamp, an amplifier 25 which amplifies the current output generated by the light-receiving element, and an A/D converter 27 which converts the amplified current or voltage value into a digital signal.

The first detection unit 36 sequentially applies light beams from the blue, green, and red lamps to a first area 41 of the bill P conveyed in the direction indicated by an arrow a, detects the respective reflected light beams by the light-receiving elements, and supplies current outputs to the A/D converter 26 through the amplifier 24. The first detection unit 36 then sends the visible light image information converted into a digital signal to the detection information processing unit 20. The CPU then processes the signal.

The second detection unit 37 applies infrared light from the infrared lamp to a second area 42 of the conveyed bill P, detects the reflected light by using the light-receiving element, and supplies the current output to the A/D converter 27 through the amplifier 25. The second detection unit 37 then sends the infrared image information converted into a digital signal to the detection information processing unit 20. The CPU 28 then processes the signal.

FIG. 5 is a view showing a state wherein infrared light is applied to an example of a sheet. FIG. 6 is a view showing a state wherein infrared light is applied to another example of a sheet.

As shown in FIG. 5, if an infrared pattern 43 is formed in a second area 42 on the bill P by using, for example, ink which can be revealed by the application of infrared light, the infrared pattern 43 is revealed by the application of infrared light. The second detection unit can detect reflected light based on the infrared pattern 43 by using the light-receiving element and send the resultant signal to the detection information processing unit 20.

FIG. 6 is a view showing a state wherein infrared light is applied to a sheet P' on which the infrared pattern 43 is not formed. This infrared image is similar to an image revealed by the application of visible light. A visible image on the sheet P is similar to the image shown in FIG. 6. Obviously, the application of visible light alone cannot discriminate the sheet P from the sheet P'.

In the apparatus shown in FIG. 3, the first to fourth detection units can be arranged in a random order. In addition, although the second inspection unit shown in FIG. 4 uses the detection unit for obtaining infrared image information as an example of a detection unit, the detection unit used in the second inspection unit is not limited to this. For example, in order to detect one or more feature amounts of magnetic information of a bill, fluorescent emission pattern information, thread pattern information, hologram image information, a radio wave signal, and second visible light image information different from the first visible light image information described above, this apparatus can include one or more detection units in accordance with the feature amounts to be detected.

When magnetic information of a bill is to be obtained, this apparatus may include a magnetic information reading element such as an MR element instead of the light source 29 and the light-receiving unit 23.

When fluorescent emission pattern information is to be obtained, this apparatus can include, for example, an ultraviolet lamp as the light source 29.

When the second visible image information different from the first visible image information is to be obtained, this apparatus can include blue, green, and red lamps as the light source 29 like the first detection unit, and three light-receiving elements for receiving corresponding reflected light beams as the light-receiving unit 23.

When thread pattern information is to be obtained and a thread pattern is formed from a metal such as aluminum, this apparatus can include a metal detector such as a high-frequency oscillation type proximity sensor instead of the light source 29 and the light-receiving unit 23.

When thread pattern information is to be obtained and a thread pattern is magnetic information formed from magnetic ink or the like, this apparatus can include a magnetic detector such as an MR sensor instead of the light source 29 and the light-receiving unit 23.

When hologram image information is to be obtained, this apparatus can include blue, green, and red lamps as the light source 29 like the first detection unit 36, and three light-receiving elements for receiving corresponding reflected light beams as the light-receiving unit 23. Note that in this case, in accordance with a hologram image pattern, each light-receiving element can be arranged at an angle at which reflected light of light applied to the bill at a specific angle, which is reflected by the hologram pattern at an angle unique to the reflected light, can be received.

When a radio wave signal is to be obtained, this apparatus can include a receiver such as an RFID reader which can receive, in a noncontact manner, information sent from a radio chip when a bill passes through the reader instead of the light source 29 and the light-receiving unit 23.

In order to change an area to be detected on a bill, as needed, and detect one or more feature amounts, this apparatus can include one or more of, for example, an upper surface reflection image detection unit, a lower surface reflection image detection unit for detecting reflected light from the lower surface, a transmission image detection unit, a fluorescent emission image detection unit, and a thickness detection unit, infrared image detection unit, magnetic detection unit, fluorescent emission pattern detection unit, thread pattern detection unit, hologram image detection unit, a radio wave signal detection unit, and second visible light image detection unit different from the first visible light image detection unit as the third and fourth detection units 38 and 39 included in the third inspection unit 47 for performing authenticity determination in accordance with feature amounts to be detected. Defection units used in the second inspection unit 37 may be excluded from the third inspection unit 47.

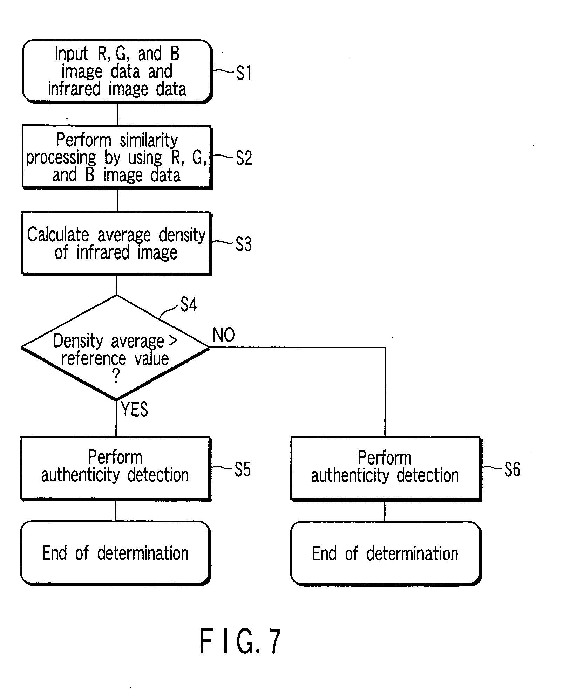

FIG. 7 is a flowchart showing processing operation in the detection information processing unit 20 in FIG. 3.

As shown in FIG. 7, first of all, blue light image information, green light image information, and red light image information formed by the application of light by the blue, green, and red lamps, which are detected by the first detection unit 36, are input to the detection information processing unit 20, and infrared image information detected by the second detection unit 37 is then input to the detection information processing unit 20 (S1).

The detection information processing unit 20 collates the blue light (B) image information, green light (G) image information, and red light (R) image information with the pieces of light image information of the respective colors of various kinds of bill which are measured in advance to check similarities (S2).

This narrows down the range of classifications of bill.

The infrared image information is then used to extract a feature position in the area, e.g., a character information area and calculate a density average (S3).

The detection information processing unit 20 compares the obtained density average with the reference value of the density average of infrared images on various kinds of bill which are measured in advance, and determines whether the density average based on the infrared image information is larger than the reference value (S4), thereby further specifying the classification of the bill.

If it is determined that the density average based on the infrared image information is larger than the reference value, the corresponding bill is determined as bill 1. The detection information processing unit 20 then performs authenticity determination on the bill on the basis of the detection information detected by the succeeding third and fourth detection units (S5). The determination processing is then terminated.

If it is determined that the density average based on the infrared image information is equal to or less than the reference value, the corresponding bill is determined as bill 2. The detection information processing unit 20 then performs authenticity determination on the bill on the basis of the detection information detected by the succeeding third and fourth detection units (S5). The determination processing is then terminated.

Controlling the gates on the basis of the specified classifications of bill and authenticity determination results makes it possible to collect the bill in desired collection units.

As has been described above, using the present invention makes it possible to easily discriminate sheets having similar graphic patterns and collect them by causing the first inspection unit to narrow down the range of the classifications of the sheets, causing the second inspection unit to further specify the classifications of the sheets whose range is narrowed down, and causing the third inspection unit to perform authenticity determination.

## Claims

1. A sheet processing method of determining a sheet (P) and processing the sheet on the basis of the determination result **characterized by** comprising:
loading the sheet into a loading unit (5);
conveying the sheet loaded into the loading unit;
causing a first inspection unit (45) to detect a first feature amount from a first area of the sheet conveyed by conveying, and narrowing down a range of a classification of the sheet on the basis of the first feature amount;
causing a second inspection unit (46) to detect a second feature amount from a second area different from the first area of the sheet and further specifying a classification of the sheet by narrowing down the range thereof on the basis of the detected second feature amount;
causing a third inspection unit (47) to detect a third feature amount of the sheet and determining the sheet, whose classification is specified, on the basis of the detected third feature amount; and
collecting the sheet in a collecting unit (15a, 15b, 15c, 15d, 15e, 15f) on the basis of the determination result.

2. A method according to claim 1, **characterized in that** the first feature amount is first visible light image information, and
the second feature amount is at least one feature amount selected from infrared image information, magnetic information, fluorescent emission pattern information, thread pattern information, hologram image information, a radio wave signal, and second visible light image information different from the first visible light image information.

3. A method according to claim 2, **characterized in that** the first visible light image information is at least one of character information and graphic pattern information.

4. A method according to claim 1, **characterized in that** the third feature amount is at least one feature amount selected from upper surface reflection image information, lower surface reflection image information, transmission image information, fluorescent emission image information, thickness information, infrared image information, magnetic information, fluorescent emission pattern information, thread pattern information, hologram image information, a radio wave signal, and second visible light image information different from the first visible light image information.

5. A sheet processing apparatus (1) **characterized by** comprising:
a loading unit (5) in which a sheet (P) is loaded;
a conveying unit (6) which conveys the sheet loaded by the loading unit;
a first inspection unit (45) which detects a first feature amount from a first area of the sheet conveyed by the conveying unit;
a second inspection unit (46) which detects a second feature amount from a second area different from the first area;
a third inspection unit (47) which detects a third feature amount of the sheet having the specified classification;
a detection information processing unit (20) which processes pieces of detection information of the sheet from the first inspection unit, the second inspection unit, and the third inspection unit, and performs determination; and
a collecting unit which collects the sheet on the basis of the determination result, in which the detection information processing unit narrows down a range of a classification of the sheet on the basis of the first feature amount detected by the first inspection unit, further specifies a classification of the sheet, whose range is narrowed down, on the basis of the second feature amount detected by the second inspection unit, and determines the sheet, whose classification is specified, on the basis of the third feature amount of the sheet detected by the third inspection unit.

6. An apparatus according to claim 5,
**characterized in that**
the first feature amount is first visible light image information, and
the second feature amount is at least one feature amount selected from infrared image information, magnetic information, fluorescent emission pattern information, thread pattern information, hologram image information, a radio wave signal, and second visible light image information different from the first visible light image information.

7. An apparatus according to claim 6, **characterized in that** the first visible light image information is at least one of character information and graphic pattern information.

8. An apparatus according to claim 5, **characterized in that** the third feature amount is at least one feature amount selected from upper surface reflection image information, lower surface reflection image information, transmission image information, fluorescent emission image information, thickness information, infrared image information, magnetic information, fluorescent emission pattern information, thread pattern information, hologram image information, a radio wave signal, and second visible light image information different from the first visible light image information.
